# EUROPEAN PATENT SPECIFICATION

(11) **EP 4 041 822 B1**
(45) Date of publication and mention of the grant of the patent: **06.12.2023**
(21) Application number: 20797007.0
(22) Date of filing: 07.10.2020
(51) Int. Cl.: C08L 23/06, D01F 6/46, B33Y 70/00, B33Y 10/00, B29C 64/118, C08L 53/00, D01D 5/00, D01D 5/08, B33Y 80/00

(54) **ADDITIVE MANUFACTURING USING RECYCLED POLYOLEFINS WITH OLEFIN BLOCK COPOLYMERS AND ARTICLES MADE THEREFROM**
ADDITIVE HERSTELLUNG UNTER VERWENDUNG VON RECYCLIERTEN POLYOLEFINEN MIT OLEFINBLOCK-COPOLYMERN UND DAFÜR HERGESTELLTEN ARTIKELN
FABRICATION D'ADDITIFS À L'AIDE DE POLYOLÉFINES RECYCLÉES AVEC DES COPOLYMÈRES À BLOC OLÉFINE ET DES ARTICLES EN PRODUITS

(30) Priority: 11.10.2019 US 201962913762 P
(43) Date of publication of application: 17.08.2022
(73) Proprietor: Dow Global Technologies LLC, Midland, MI 48674 (US)
(72) Inventor: GORIN, Craig F., Midland, MI 48674 (US); LI, Jun, Freeport, TX 77541 (US); THAKRE, Piyush, Lake Jackson, TX 77566 (US); ZENG, Yongchao, Lake Jackson, TX 77566 (US)
(74) Representative: Beck Greener LLP
(86) International application number: PCT/US2020/054499
(87) International publication number: WO 2021/071889

(56) References cited:
- WO-A1-2019/092498
- CN-A- 104 629 152
- KR-B1- 101 912 919
- US-A1- 2019 218 383

## Description

### FIELD OF THE INVENTION

The field of this invention is a method of additive manufacturing in which thermoplastic polymeric materials (e.g. in the form of pellets, powders or filaments) are softened by heating (e.g. melted) and extruded, for example, using filaments that are advanced and heated through a nozzle and deposited on a platen (commonly referred to as fused filament fabrication or FFF).

### BACKGROUND

Additive manufacturing of thermoplastic polymers (typically nylon) is well known. For example, fused filament fabrication (FFF), which is also commonly called plastic jet printing has been used to form three dimensional (3D) parts by using thermo-plastic filaments that are drawn into a nozzle heated, melted, and then extruded. The extruded filaments fuse together upon cooling (see, for example, U.S. Patent No. 5,121,329). Because the technique requires melting of a filament and extrusion, the materials have been limited to thermoplastic polymers (typically nylon) and complex apparatus. Further relevant information can also be found in document KR 101 912 919 B1.

There is a desire to find utility for post-consumer recycled polyolefin (PCRPO) streams, such as post-consumer recycle streams comprising, as a significant or major or primary component, such polyolefins as low density polyethylene (LDPE), linear low density polyethylene (LLDPE), high density polyethylene (HDPE), polypropylene (PP), and/or combinations thereof. However, polymers displaying crystalline formation in particular orientations such as high density polyethylene (HDPE) or polypropylene have also tended to warp and not adequately print during additive manufacturing such as FFF. These problems can become particularly severe when trying to form larger parts (e.g. cross section area greater than 2 square inches). Use of PCRPO streams can also have problems in additive manufacturing due to variation in composition including the presence of contaminants in the stream.

### SUMMARY OF THE INVENTION

Disclosed herein is a method of additive manufacturing comprising,
(i) providing a thermoplastic material comprising 5 to 75 weight percent post-consumer recycled polyolefin and 25 to 95 weight percent of an olefin block copolymer,
(ii) heating and dispensing said thermoplastic material through a nozzle to form an extrudate deposited on a base,
(iii) moving the base, nozzle or combination thereof while dispensing the thermoplastic material so that there is horizontal displacement between the base and nozzle in a predetermined pattern to form an initial layer of the material on the base, and
(iv) repeating steps (ii) and (iii) to form a successive layer of the material adhered on the initial layer to form an additive manufactured part.

Also disclosed is an additive manufactured article comprised of at least two layers adhered together, at least one layer comprising 5 to 75 weight percent post-consumer recycled polyolefin and 25 to 95 weight percent of an olefin block copolymer.

Also disclosed is a filament useful for additive manufacturing, comprising a filament comprising plurality of the layers comprise 5 to 75 weight percent post-consumer recycled polyolefin and 25 to 95 weight percent of an olefin block copolymer

The improved additive manufacturing method can be used for rapid prototyping of articles.

### BRIEF DESCRIPTION OF DRAWINGS

Figure 1 is a side view of the additive manufactured article of this invention being made by the method of this invention.
Figure 2 is an end view of the extrudates of the initial layer being formed in the method of this invention.
Figure 3 is an end view of the finished initial layer of the method of this invention.
Figure 4 is a photograph of an example of additive manufactured article according to the method of this invention.
Figure 5 is a photograph of an example of additive manufactured article according to the method of this invention
Figure 6 is a photograph demonstrating what a failure of a print test can look like.

### DETAILED DESCRIPTION OF THE INVENTION

### The Method

The additive manufacturing method may use any suitable apparatus and method of where a thermoplastic composition is heated and extruded to successive layers to build an article. For example, FFF additive manufacture such as those known in the art can include the steps of method steps of heating, dispensing, repeating and optionally removing can be used. The method can utilize a filament that has been made previously and then loaded into known FFF printing apparatus. Alternatively, the filament can utilize pellets of the thermoplastic composition. Alternatively, the ingredients of the thermoplastic composition can be fed and melt blended and then extruded. The thermoplastic material can be heated to softening (e.g. melted) in the equipment (e.g. at the nozzle) and extruded as an extrudate in a conventional manner while forming the additive manufactured as follows.

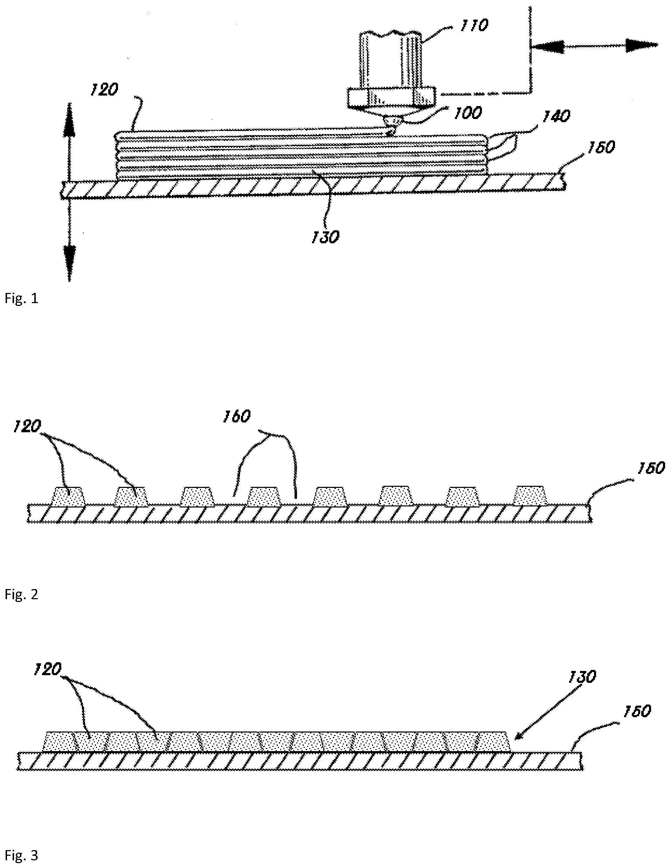

Turning to Figures 1-3, the method comprises heating and dispensing the thermoplastic material through nozzle 100 attached to the nozzle assembly 110. Upon dispensing the material forms an extrudate 120 that forms an initial layer 130 and successive layers 140 on base 150. Nozzle assembly 110 is depicted being orthogonal to base, but may be set at any useful angle to form the extrudate whereby the extrudate 120 and nozzle assembly 110 form an obtuse angle with the extrudate 120 being parallel to the base. In addition, the nozzle assembly 110 may be rotated about its longitudinal axis, for example, to reorient the shape of the opening in the nozzle 100, to create extrudates 120 having differing relationship to the base 150 as shown in Figures 1-3.

A relative motion of the base 150 and nozzle assembly 110 is also shown, but it is understood that the base 150, nozzle assembly 110 or both may be moved to cause the relative motion in any horizontal direction or vertical direction. The motion is made in a predetermined manner, which may be accomplished by any known CAD/CAM methodology and apparatus such as those well known in the art and readily available robotics or computerized machine tool interface. Such pattern forming is described, for example, in U.S. Patent No. 5,121,329.

The extrudate 120 may be dispensed continuously or disrupted to form the initial layer 130 and successive layers 140. If disrupted extrudates 120 are desired, the nozzle may be comprised of a valve (not pictured) to shut off the flow of the material. Such valve mechanism may be any suitable such as any known electromechanical valves that can easily be controlled by any CAD/CAM methodology in conjunction with the pattern. The disruption can create gaps 160 which can remain as gaps or be filled with the same or different extrudate 120 in a subsequent deposition from a nozzle.

To improve adhesion, the base may have a coating or film of a compatible material such as polypropylene or polyethylene tape.

More than one nozzle assembly 110 may be employed to make composite or gradient structures within the additive manufactured part. Likewise, a second nozzle assembly 110 may be employed to dispense a support structure that may be later removed so as to allow more complex geometries to be formed such as described in U.S. Patent No. 5,503,785. The support material may be any that adds support and be removed easily such as those known in the art, for example, waxes.

### The Thermoplastic Material

The method uses a thermoplastic material which comprises a post-consumer recycled polyolefin (PCRPO) composition and an olefin block copolymer composition.

### PCRPO

The post-consumer recycled polyolefin (PCRPO) composition is derived from consumer products or containers, or industrial scrap. Sources of the PCRPO composition can include, for example, bottle caps and closures, milk, water or orange juice containers, detergent bottles, office automation equipment (printers, computers, copiers, etc.), white goods (refrigerators, washing machines, etc.), consumer electronics (televisions, video cassette recorders, stereos, etc.), automotive shredder residue (the mixed materials remaining after most of the metals have been sorted from shredded automobiles and other metal-rich products "shredded" by metal recyclers), packaging waste, household waste, rotomolded parts (kayaks/coolers), building waste and industrial molding and extrusion scrap.

The PCRPO composition comprises at least 50 weight percent, or at least 60 weight percent, or at least 70 weight percent, or at least 75 weight percent, or at least 80 weight percent, or at least 85 weight percent, or at least 90 weight percent, or at least 95 weight percent, of a polyolefin based on total weight of the post-consumer recycled polyolefin composition. The PCRPO composition can comprise up to 99.9 weight percent, or up to 99.5 weight percent, or up to 99 weight percent, or up to 98 weight percent, or up to 97 weight percent, or up to 96 weight percent, or up to 95 weight percent, or up to 90 weight percent, of polyolefin based on total weight of the post-consumer recycled polyolefin composition.

The polyolefin in the PCRPO can be any polyolefin found in recycled streams. For example, high density polyethylene (HDPE), low density polyethylene (LDPE), linear low density polyethylene (LLDPE), MDPE, ULDPE, polypropylene (PP), functionalized polyolefins and combinations of two or more of the preceding polymers.

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US4,599,392). LDPE resins typically have a density in the range of 0.916 to 0.935 g/cm³.

The term "LLDPE", includes both resin made using the traditional Ziegler-Natta catalyst systems and chromium-based catalyst systems as well as single-site catalysts, including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm³. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5.

The term "HDPE" refers to polyethylenes having densities greater than about 0.935 g/cm³ and up to about 0.970 g/cm³, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm³, which are generally prepared with Ziegler-Natta catalysts, chrome catalysts, or single-site catalysts including, but not limited to, bis-metallocene catalysts and constrained geometry catalysts.

"Polypropylene" means polymers comprising greater than 50% by weight of units which have been derived from propylene monomer. This includes polypropylene homopolymers or copolymers (meaning units derived from two or more comonomers). Common forms of polypropylene known in the art include homopolymer polypropylene (hPP), random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof.

A "functionalized polyolefin" is a polyolefin comprising atoms other than carbon and hydrogen, for example, the functionalized polyolefin may be modified with hydroxyl, an amine, an aldehyde, an epoxide, an ethoxylate, a carboxylic acid, an ester, an anhydride group, or combinations thereof. Generally, a functionalized polyolefin comprises functional groups such as protonated (-COOH) or non-protonated (-COO-) acid groups or acid salt. include ethylene/acrylic acid copolymer (for example, polymers sold under the tradename PRIMACOR^{™} (a trademark of SK Global NUCRFL^{™} (a trademark of The Dow Chemical Company) and ESCOR^{™} (ESCOR is a trademark of Exxon Corporation)), ethylene/methacrylic acid copolymers (for example, polymers sold under the tradename NUCREL^{™}), maleic anhydride modified polyolefins (for example polymers sold under the tradenames LICOCENE^{™} (a trademark of Clariant AG Corporation), EPOLENE^{™} (EPOLENE is a trademark of Westlake Chemical Corporation) and MORPRIME^{™} (a trademark of Rohm and Hass Chemicals LLC)). Ethylene ester copolymers such as those modified with vinyl acetate (ELVAX, from The Dow Chemical Company), Acrylate modified (ELVALOY available from DuPont) and AMPLIFY (Dow)). Likewise, subsequent ionomers of the functionalized polyolefins formed via neutralization with cations from metals such as Zn, Na, Mg or K, with an example being SURLYN available from The Dow Chemical Company.

The PCRPO composition includes contaminants primarily arising from the article(s) from which the PCRPO composition is derived and the use(s) of such article(s). Examples of such contaminants include non-olefin polymers, oxidized polyolefins, inorganic materials, adhesive materials, paper, oil residue, food residue, and combinations of two or more thereof.

The amount of contaminants can be at least 0.1, or at 0.5, or at least 1, or at least 2, or at least 3, or at least 4, or at least 5, or at least 10 weight percent. The amount of contaminants can be up to 50, or up to 40, or up to 30, or up to 25, or up to 20, or up to 15, or up to 10, or up to 5 weight percent of total amount of contaminants based on total weight or the PCRPO composition. The higher amounts of contaminants can occur when the contaminants include other polymeric materials, such as, for example, nylons, polyesters (e.g. polyethylene terephthalate (PET), alkylene vinyl alcohols (e.g. ethylene vinyl alcohol (EVOH), etc.).

The PCRPO can have a Gel Index (200 microns) of at least 100, or at least 150 or at least 200 mm²/24.6 cm³ of sample. A unit sample volume of for example 24.6 cm³ can be inspected in each gel measurement. The inspection can occur using a gel counter having a light source, a line scan camera (e.g. Optical Control System (OCS) FSA100 camera (25um resolution)) and an imaging processor. The gel counter can be configured in transmission mode, with the film passing between the light source and the camera. The analysis can include illuminating the film sample with the light source. The camera can measure the intensity of the light transmitted through the film. Gels present in the film refract or block light reducing the amount of light reaching the camera. In this way a digitalized image of the gel can be created. The area of the digitalized gel can be determined by summing the number of pixels and it includes. The diameter of the gel is assigned by calculating the diameter of a circle with equivalent area. A sample volume of, for example, 24.6 cm³ corresponds to an inspected area of 0.323 m², of a 76 micron thick film. The total area of all gels with diameter > 200 micron is determined in each measurement. Fifty such measurements can be carried out. The average value of the total gel area is calculated based on the total number of measurements (e.g. 50), and expressed in mm² per volume of sample (e.g. 24.6 cubic centimeters sample) inspected. A Gel index of virgin polyolefin resin is typically less than about 10 mm²/24.6 cm³ of sample. PCRPO have a higher gel index due to contamination and because the materials have been made into an article, used, and recovered. The processing means that the material has gone through at least two or at least three prior thermal cycles of heating and cooling.

The PCRPO can have a melt index (as defined below) according to ASTM 1238-13 of at least 0.1 or at least 0.2 or at least 0.3 or at least 0.4 or at least 0.5 g/10 min up to 40 or up to 30 or up to 20 or up 10 or up to 5 or up to 2 g/10 min at 190C and 2.16 kg.

### The olefin block copolymer.

The composition further includes an olefin block copolymer composition.

Olefin block copolymers, in the broadest sense, are polymers made using separate catalysts and shuttling agents to form block copolymers of 2 differing olefin monomers, monomer mixtures or combination thereof. The olefin block copolymer that is formed may have some other polymers in the polymer product made such as some fraction of homopolymers of the monomers or mixture of monomers used to make the olefin block copolymer. These methods are known and described, for example, in U.S. Pat. Nos. 8,822,598; 8,686,087; 9,511,567; 8,822,598 and 9,243,090.

The olefin block copolymer are comprised of two or more olefin comonomers. Preferably, the olefin block copolymer comprises in polymerized form propylene and ethylene and/or one or more C4-20 α-olefin comonomers.

The olefin block copolymer composition can include the block copolymer in the following composites referred to as a block composite (BC) and a crystalline block composite (CBC) herein.

For examples, the "block composite" ("BC") can comprise:
(i) an ethylene based polymer (EP) having an ethylene content of from 10 mol% to less than 90 mol% (a soft copolymer);
(ii) an alpha-olefin based polymer (AOP) having an alpha-olefin content of greater than 90 mol% (a hard copolymer); and
(iii) a block copolymer having an ethylene block (EB) and an alpha-olefin block (AOB);
wherein the ethylene block (soft block/soft segment) of the block copolymer is the same composition as the ethylene based polymer of component (i) of the block composite and the alpha-olefin block (hard block/hard segment) of the block copolymer is the same composition as the alpha-olefin based polymer of component (ii) of the block composite. The term "same composition" refers to two components that have identical monomer and comonomer contents, identical structures, and identical physical properties. The compositional split between the amount of ethylene based polymer and alpha-olefin based polymer will be the same, or essentially the same, as that between the corresponding blocks in the block copolymer. Nonlimiting examples of suitable α-olefins include, for example, C3-C10 α-olefins such as C3, C4, C5, C6 and C8 α-olefins. In certain embodiments, the α-olefin is propylene. In further embodiments, the AOB and EB may be an iPP-EP diblock copolymer.

"Hard" blocks (also referred to as hard segments) refer to highly crystalline blocks of polymerized units in which a monomer (e.g., propylene) is present in an amount greater than or equal to 90 mol%. In other words, the comonomer content (e.g., ethylene content) in the hard blocks/segments is less than or equal to 10 mol%. In some embodiments, the hard segments comprise all or substantially all propylene units (such as an iPP - isotactic polypropylene-copolymer or homopolymer block). "Soft" blocks (also referred to as soft segments), on the other hand, refer to amorphous, substantially amorphous, or elastomeric blocks of polymerized units in which a monomer (e.g., ethylene) is present in an amount from 10 mol% to less than 90 mol%. In other words, the comonomer content (e.g., propylene content) in the soft blocks/segments is greater than 10 mol%.

The BC can have a total ethylene content that is from 25 wt%, or from 30 wt% to 50 wt%, or to 55 wt%, or to 60 wt%, or to70 wt%, based on the total weight of the BC. The remainder of the total weight of the BC may be accounted for by units derived from at least one C3-C10 α-olefin, such as propylene. The BC can be a propylene-based polymer containing greater than, or equal to, 50 wt% units derived from propylene, based on the total weight of the BC.

The BC can include (i) a soft copolymer having an ethylene content that is from 10 mol% to less than 90 mol%, (ii) a hard copolymer having a propylene content that is greater than or equal to 90 mol%, and (iii) a block copolymer (e.g., a diblock) having a soft block (i.e., soft segment) and a hard block (i.e., hard segment), wherein the hard block of the block copolymer is the same composition as the hard copolymer of the block composite and the soft block of the block copolymer is the same composition as the soft copolymer of the block composite. The compositional split between the amount of soft copolymer and hard copolymer will be the same, or essentially the same, as that between the corresponding blocks in the block copolymer.

The BC can include (i) a soft copolymer having an ethylene content that is greater than 10 wt% and less than 86 wt%, (ii) a hard copolymer having a propylene content that is greater than 80 wt% and up to 100 wt%, and (iii) a block copolymer (e.g., a diblock) having a soft block (i.e., soft segment) and a hard block (i.e., hard segment), wherein the hard block of the block copolymer is the same composition as the hard copolymer of the BC and the soft block of the block copolymer is the same composition as the soft copolymer of the BC. The compositional split between the amount of soft copolymer and hard copolymer will be the same, or essentially the same, as that between the corresponding blocks in the block copolymer.

In the BC, the hard blocks refer to highly crystalline blocks of polymerized α-olefin units (e.g., propylene). In the hard blocks, the monomer (i.e., propylene) may be present in an amount greater than 80 wt% (e.g., greater than 85 wt%, greater than 90 wt%, and/or greater than 95 wt%), based on the weight of the hard block. The remainder of the hard block may be the comonomer (e.g., ethylene) in an amount of less than 20 wt% (e.g., less than 15 wt% and/or less than 10 wt%), based on the weight of the hard block. In an embodiment, the hard blocks comprise all or substantially all propylene units, such as an iPP (isotactic) homopolymer block or an iPP copolymer block with less than 10 wt% of ethylene. The "soft blocks" refer to amorphous, substantially amorphous, or elastomer blocks of polymerized ethylene units. In the soft blocks, the monomer (i.e., ethylene) may be present in an amount of greater than 20 wt% and less than 90 wt% (e.g., from 40 wt% to 89 wt%, from 45 wt% to 85 wt%, and/or from 50 wt% to 80 wt%), based on the weight of the soft block. The remainder of the soft block may be the comonomer (e.g., propylene).

The block composite can include a block copolymer having 30-70 wt% hard block and 30-70 wt% soft block. In other words, the block composite can include a block copolymer having 30-70 wt% hard block and 30-70 wt% soft block, based on the total weight of the block copolymer.

The block copolymer of the BC can have the formula (EP)-(iPP), in which EP represents the soft block of polymerized ethylene and propylene monomeric units (e.g., 50-80 wt% of ethylene and remainder propylene) and iPP represents a hard block of isotactic propylene homopolymer or isotactic propylene copolymer (e.g., less than 10 wt% of ethylene and remainder propylene).

An exemplary measurement of the relative amount of the block copolymer is referred to as the Block Composite Index (BCI), as further discussed below. The BCI for the BC is greater than 0 and less than 1.0. The BC can have a Block Composite Index (BCI) from greater than zero, or greater than 0.1, or greater than 0.2, or greater than 0.3 to 0.4, or to 0.5, or to 0.6, or to 0.7, or to 0.8, or to 0.9, or to 1.0. The BC can have a BCI from greater than zero to 0.4, or from 0.1 to 0.3, or 0.4. In another embodiment, the BC has a BCI from greater than 0.4 to 1.0, or from 0.4, or from 0.5, or from 0.6 to 0.7, or to 0.9, or to 1.0. The BC can have a BCI from 0.7, or from 0.8, or from 0.9 to 1.0.

The BC can have a weight average molecular weight (Mw) from 10,000 g/mol, or from 35,000 g/mol, or from 50,000 g/mol, or from 80,000 g/mol to 200,000 g/mol, or to 300,000 g/mol, or to 500,000 g/mol, or to 1,000,000 g/mol, or to 2,500,000 g/mol. The molecular weight distribution (Mw/Mn) or polydispersity of the BC can be less than 5, or from 1, or from 1.5 to 4, or to 5.

The melt flow rate (MFR) of the BC can be from 0.1 g/10 min, or from 3 g/10 min to 10 g/10 min, or to 15 g/10 min, or to 20 g/10 min, or to 60 g/10 min, or to 100 g/10 min, or to 1,000 g/10 min at 230 °C and 2.16 kg according to ASTM 1238-13.

The density of the BC can be from 0.850 g/cc, or from 0.860 g/cc, or from 0.865 g/cc to 0.890 g/cc, or to 0.895 g/cc, or to 0.900 g/cc, or to 0.910 g/cc, or to 0.920 g/cc.

The BC can exhibit two melting peaks, a first melting peak (Tm1BC) and a second melting peak (Tm2BC). The BC can have a second melting peak (Tm2BC) that is greater than 35°C, or greater than 90°C, or greater than 100°C, or from 40°C, or from 100°C to 150°C.

The difference between Tm1BC and Tm2BC can be greater than, or equal to, 40°C. The difference between Tm1BC and Tm2BC can be greater than 40°C, or greater than 50°C, or greater than 60°C.

The BC can contain:
(i) from a lower limit of 0.5 wt%, or 10 wt%, or 20 wt%, or 30 wt% to an upper limit of 40 wt%, or 50 wt%, or 60 wt%, or 70 wt%, or 79 wt%, or 95 wt% EP;
(ii) from a lower limit of 0.5 wt%, or 10 wt%, or 20 wt%, or 30 wt% to an upper limit of 40 wt%, or 50 wt%, or 60 wt%, or 70 wt%, or 79 wt%, or 95 wt% AOP; and
(iii) from 5 wt%, or from 50 wt% to 99 wt % block copolymer, based on total weight of the BC.

The sum of the weight percents of EP, AOP and block copolymer equals 100%.

The block copolymer of the BC can contain from a lower limit of 5 wt%, or 10 wt%, or 25 wt%, or 30 wt% to an upper limit of 70 wt%, or 75 wt%, or 90 wt%, or 95 wt% ethylene blocks (EB); and from an upper limit of 95 wt%, or 90 wt%, or 75 wt%, or 70 wt% to a lower limit of30 wt%, or 25 wt%, or 10 wt%, or 5 wt% alpha-olefin blocks (AOB).

In an embodiment, the BC contains, consists essentially of, or consists of:
(i) from as a lower limit 0.5 wt%, or 10 wt%, or 20 wt%, or 30 wt% to as an upper limit 40 wt%, or 50 wt%, or 60 wt%, or 70 wt%, or 79 wt%, or 95 wt% EP;
(ii) from as a lower limit 0.5 wt%, or 10 wt%, or 20 wt%, or 30 wt% to as an upper limit 40 wt%, or 50 wt%, or 60 wt%, or 70 wt%, or 79 wt%, or 95 wt% iPP; and
(iii) from as a lower limit 5 wt%, or 10 wt%, or 25 wt%, or 30 wt%, or 50 wt% to as an upper limit 70 wt%, or 80 wt%, or 90 wt%, or 95 wt%, or 99 wt % block copolymer, based on total weight of the BC; and
the block composite has one, some, or all of the following properties:
(a) the EP contains from as a lower limit 50 wt%, or 55 wt%, or 60 wt% to as an upper limit 65 wt%, or 70 wt%, or 75 wt%, or 80 wt% ethylene and a reciprocal amount of propylene, or from as a lower limit 20 wt%, or 25 wt%, or 30 wt%, or 35 wt% to at an upper limit 40 wt%, or 45 wt%, or 50 wt% propylene, based on the total weight of the EP; and/or
(b) the EP contains from as a lower limit 10 mol%, or 20 mol%, or 30 mol%, or 40 mol%, or 50 mol%, or 60 mol%, or 65 mol%, or 70 mol%, or 73 mol% to as an upper limit 75 mol%, or 80 mol%, or 85 mol%, or 89 mol% polymerized ethylene units and a reciprocal amount of polymerized propylene units, or from as a lower limit 11 mol%, or 15 mol%, or 20 mol%, or 25 mol% to as an upper limit 27 mol%, or 30 mol%, or 35 mol%, or 40 mol%, or 50 mol%, or 60 mol%, or 70 mol%, or 80 mol%, or 90 mol% polymerized propylene units, based on the total number of moles of the EP; and/or
(c) the iPP contains from as an upper limit 100 wt%, or 99.5 wt%, or 99 wt% to as a lower limit 95 wt%, or 90 wt%, or 85 wt%, or 80 wt%, or 75 wt%, or 70 wt%, or 65 wt%, or 60 wt%, or 55 wt% propylene and a reciprocal amount of ethylene, or from as a lower limit 0 wt%, or 0.5 wt% to as an upper limit 1 wt%, or 5 wt%, or 10 wt%, or 15 wt%, or 20 wt%, or 25 wt%, or 30 wt%, or 35 wt%, or 40 wt%, or 45 wt% ethylene, based on the total weight of the iPP; and/or
(d) the iPP contains from as a lower limit 90 mol%, or 91 mol%, or 92 mol%, or 93 mol%, or 94 mol%, or 95 mol%, or 96 mol%, or 97 mol%, or 98 mol% to 99 mol% polymerized propylene units and a reciprocal amount of polymerized ethylene units, or from 1 mol% to 2 mol%, or to 3 mol%, or to 4 mol%, or to 5 mol%, or to 6 mol%, or to 7 mol%, or to 8 mol%, or to 9 mol%, or to 10 mol% polymerized ethylene units, based on the total number of moles of the iPP; and/or
(e) the block copolymer contains from as a lower limit 5 wt%, or 10 wt%, or 25 wt%, or 30 wt% to as an upper limit 70 wt%, or 75 wt%, or 90 wt%, or 95 wt% EB and a reciprocal amount, or from as an upper limit 95 wt%, or 90 wt%, or 75 wt%, or 70 wt% to as a lower limit 30 wt%, or 25 wt%, or 10 wt%, or 5 wt% iPP blocks, based on the total weight of the block copolymer; and/or
(f) a BCI from 0.1, or from 0.2, or from 0.3, or from 0.4 to 0.5, or to 0.6, or to 0.7, or to 0.8, or to 0.9, or to 1.0; and/or
(g) a melt flow rate (MFR) from as a lower limit 0.1 g/10 min, or 5 g/10 min, or 10 g/10 min, or 15 g/10 min, or 18 g/10 min to as an upper limit 20 g/10 min, or 30 g/10 min, or 50 g/10 min, or 1,000 g/10 min at 230 °C and 2.16 kg according to ASTM 1238-13; and/or
(h) a weight average molecular weight (Mw) from as a lower limit 50,000 g/mol, or 80,000 g/mol, or 100,000 g/mol to as an upper limit 150,000 g/mol, or 200,000 g/mol, or 300,000 g/mol, or 500,000 g/mol, or 1,000,000 g/mol; and/or
(i) a Mw/Mn from 1.0, or from 1.5, or from 2.0, or from 2.5, or from 3.0, or from 3.5, or from 3.7 to 3.8, or to 4.0, or to 4.5, or to 5.0; and/or
(h) a heat of fusion (or melt enthalpy) from as a lower limit 20 Joules per gram (J/g), or 25 J/g, or 30 J/g, or 35 J/g, or 50 J/g, or 60 J/g, or 70 J/g, or 75 J/g, or 80 J/g to as an upper limit 85 J/g, or 90 J/g, or 95 J/g, or 100 J/g, or 125 J/g; and/or
(j) a crystallization temperature, Tc, from as a lower limit 70°C, or 75 °C, or 80°C, or 85°C to as an upper limit 90°C, or 95°C, or 100°C; and/or
(k) a first peak Tm1BC from as a lower limit 100°C, or 110°C, or 120°C, or 130°C, or 135°C to as an upper limit 138°C, or 140°C, or 145°C, or 150°C; and/or
(l) a second peak Tm2BC from as a lower limit 35°C, or 40°C to as an upper limit 45°C, or 50°C, or 60°C; and/or
(m) a difference between Tm1BC and Tm2BC that is greater than 40°C, or greater than 50°C, or greater than 60°C; and/or
(n) a total ethylene content from as a lower limit 20 wt%, or 25 wt%, or 30 wt%, or 33 wt% to as an upper limit 35 wt%, or 40 wt%, or 45 wt%, or 50 wt%, based on the total weight of the BC. The BC can have all of the above properties (a)-(n).

The BC can contain, consist essentially of, or consist of:
(i) an ethylene-based polymer having an ethylene content of from 10 mol% to less than 90 mol%;
(ii) a propylene-based polymer having a propylene content of greater than 90 mol%; and
(iii) a block copolymer comprising an ethylene block and a propylene block;

wherein the ethylene block of the (iii) block copolymer is the same composition as the (i) ethylene-based polymer; and the propylene block of the (iii) block copolymer is the same composition as the (ii) propylene-based polymer; and
the BC can have one, some, or all, of the following properties:
   (a) a melt flow rate (MFR) from at a lower limit 0.1 g/10 min, or 5 g/10 min, or 10 g/10 min, or 15 g/10 min, or 18 g/10 min to as an upper limit 20 g/10 min, or 30 g/10 min, or 50 g/10 min, or 1,000 g/10 min at 230 °C and 2.16 kg according to ASTM 1238-13; and/or
   (b) exhibits two melting peaks; and/or
   (c) a first peak Tm1BC from as a lower limit 100°C, or 110°C, or 120°C, or 130°C, or 135°C to as an upper limit 138°C, or 140°C, or 145°C, or 150°C; and/or
   (d) a second peak Tm2BC from 35°C, or from 40°C to 45°C, or to 50°C, or to 60°C; and/or
   (e) a difference between Tm1BC and Tm2BC that is greater than 40°C, or greater than 50°C, or greater than 60°C. The BC can have all of the above properties (a)-(e).

The block composite may comprise two or more embodiments discussed herein above.

The term "crystalline block composite" ("CBC") refers to polymers containing three polymer components:
(i) a crystalline ethylene based polymer (CEP) having an ethylene content of greater than, or equal to, 90 mol% (also referred to herein as a soft polymer of CBC), based on the total moles of polymerized monomer units in the crystalline ethylene-based polymer (CEP);
(ii) a crystalline alpha-olefin based polymer (CAOP) having an alpha-olefin content of greater than 90 mol% (also referred to herein as a hard polymer of the CBC), based on the total moles of polymerized monomer units in the crystalline alpha-olefin-based polymer (CAOP); and
(iii) a block copolymer comprising a crystalline ethylene block (CEB) and a crystalline alpha-olefin block (CAOB); and

wherein the crystalline ethylene block has the same or similar Tm as the crystalline ethylene-based polymer (CEP) of component (i), and
wherein the crystalline alpha-olefin block has the same or similar Tm as the crystalline alpha-olefin-based polymer (CAOP) of component (ii); and
wherein the phrase "same or similar" refers to an absolute Tm differential of ≤ 5°C, or ≤ 4°C, or ≤ 3°C, or ≤ 2°C.

The "crystalline block composite" ("CBC") can comprise:
(i) a crystalline ethylene based polymer (CEP) having an ethylene content of greater than, or equal to, 90 mol% (also referred to herein as a soft polymer);
(ii) a crystalline alpha-olefin based polymer (CAOP) having an alpha-olefin content of greater than 90 mol% (also referred to herein as a hard polymer); and
(iii) a block copolymer comprising a crystalline ethylene block (CEB) and a crystalline alpha-olefin block (CAOB);
wherein the crystalline ethylene block (CEB) (soft block/soft segment) of the block copolymer is the same composition as the crystalline ethylene based polymer (CEP) of component (i) of the block composite and the crystalline alpha-olefin block (CAOB) (hard block/hard segment) of the block copolymer is the same composition as the crystalline alpha-olefin based polymer (CAOP) of component (ii) of the block composite. The compositional split between the amount of CEP and CAOP will be the same, or essentially the same, as that between the corresponding blocks in the block copolymer. When produced in a continuous process, the CBC has a polydispersity index (PDI) from 1.7, or from 1.8 to 3.5, or to 5, or to 10, or to 15. Such CBC is described in, for example, US Patent Application Publication Nos. 2011/0313106, 2011/0313108 and 2011/0313108, all published on 22 December 2011, and in PCT Publication No. WO2014/043522A1, published 20 March 2014, with respect to descriptions of CBC, processes to make CBC, and methods of analyzing CBC. Non-limiting examples of suitable α-olefins include, for example, C3-C10 α-olefins such as C3, C4, C5, C6 and C8 α-olefins. In certain embodiments, the α-olefin is propylene.

The "crystalline ethylene based polymer" ("CEP") contains at least 90 mol% polymerized ethylene units in which any comonomer content is 10 mol% or less, or from 0 mol% to 5 mol%, or to 7 mol%, or to 10 mol%. The crystalline ethylene based polymer has corresponding melting points that are 75°C and above, or 90°C and above, or 100°C and above.

The "crystalline alpha-olefin based polymer" ("CAOP") is a highly crystalline polymer containing polymerized α-olefin units in which the monomer (e.g., propylene) is present in an amount greater than 90 mol%, or greater than 93 mol%, or greater than 95 mol%, or greater than 98 mol%, based on the total weight of the crystalline α-olefin based polymer (propylene). In an embodiment, the polymerized α-olefin unit is polypropylene. The comonomer (e.g., ethylene) content in the CAOP is less than 10 mol%, or less than 7 mol%, or less than 5 mol%, or less than 2 mol%. CAOPs with propylene crystallinity have corresponding melting points that are 80°C and above, or 100°C and above, or 115°C and above, or 120°C and above. In an embodiment, the CAOP comprises all, or substantially all, propylene units.

Nonlimiting examples of other suitable α-olefin units (in addition to propylene) that may be used in the CAOP are those that contain 4 to 10 carbon atoms, such as 1-butene, 1-hexene, 4-methyl-1-pentene and 1-octene. Nonlimiting examples of suitable diolefins include isoprene, butadiene, 1,4-pentadiene, 1,4-hexadiene, 1,5-hexadiene, 1,7-octadiene, 1, 9-decadiene, dicyclopentadiene, methylene-norbornene, 5-ethylidene-2-norbornene, or the like, and combinations containing at least one of the foregoing α-olefin units.

The block copolymer of the CBC contains crystalline ethylene block (CEB) and a crystalline alpha olefin block (CAOB). In the crystalline ethylene block (CEB), ethylene monomer is present in an amount greater than 90 mol%, or greater than 93 mol%, or greater than 95 mol%, or greater than 90 mol%, based on the total number of moles of the CEB. In an embodiment, the crystalline ethylene block (CEB) polymer is polyethylene. The polyethylene is present in an amount greater than 90 mol%, or greater than 93 mol%, or greater than 95 mol%, based on the total number of moles of the CEB. If any comonomer is present in the CEB, it is present in an amount of less than 10 mol%, or less than 5 mol%, based on the total number of moles of the CEB.

The CAOB includes a polypropylene block that is copolymerized with other α-olefin units that contain 4 to 10 carbon atoms. Nonlimiting examples of suitable α-olefins are provided above. The polypropylene is present in the CAOB in an amount of greater than or equal to 90 mol%, or greater than 93 mol%, or greater than 95 mol%, based on the total number of moles of the CAOB. The comonomer content in the CAOB is less than 10 mol%, or less than 7 mol%, or less than 5 mol percent, based on the total number of moles in the CAOB. A CAOB with propylene crystallinity has a corresponding melting point that is 80°C and above, or 100°C and above, or 115°C and above, or 120°C and above. In an embodiment, the CAOB comprises all, or substantially all, propylene units.

The CBC can contain propylene, 1-butene or 4-methyl-1-pentene and one or more comonomers. The CBC can contain, in polymerized form, propylene and ethylene and/or one or more C4-20 α-olefin comonomers, and/or one or more additional copolymerizable comonomers, or the CBC contains 4-methyl-1-pentene and ethylene and/or one or more C4-20 α-olefin comonomers, or the CBC contains 1-butene and ethylene, propylene and/or one or more C5-C20 α-olefin comonomers and/or one or more additional copolymerizable comonomers. Additional suitable comonomers are selected from diolefins, cyclic olefins, and cyclic diolefins, halogenated vinyl compounds, and vinylidene aromatic compounds. The monomer can be propylene and the comonomer can be ethylene.

The CBC can be a propylene-based polymer containing greater than, or equal to, 50 wt% units derived from propylene, based on the total weight of the CBC.

Comonomer content in the CBC may be measured using any suitable technique, such as techniques based on nuclear magnetic resonance (NMR) spectroscopy.

The CBC can exhibit two melting peaks, a first melting peak (Tm1CBC) and a second melting peak (Tm2CBC). The CBC can have a second melting peak (Tm2CBC) that is greater than 100°C, or greater than 120°C, or greater than 125°C. In an embodiment, the CBC has a second melting peak (Tm2CBC) from 100°C, or 120°C, or 125°C to 220°C, or 250°C.

The difference between Tm1CBC and Tm2CBC can be greater than, or equal to, 40°C. The difference between Tm1CBC and Tm2CBC can be greater than 40°C, or greater than 50°C, or greater than 60°C.

The CBC can have a melt flow rate (MFR) from 0.1 g/10 min to 30 g/10 min, or to 50 g/10 min, or to 1,000 g/10 min at 230 °C and 2.16 kg according to ASTM 1238-13

The CBC can have a weight average molecular weight (Mw) from as a lower limit 10,000 g/mol, or 35,000 g/mol, or 50,000 g/mol to as an upper limit 200,000 g/mol, or 300,000 g/mol, or 1,000,000 g/mol, or 2,500,000 g/mol.

The CBC can have a Crystalline Block Composite Index (CBCI) from greater than zero, or greater than 0.1, or greater than 0.2, or greater than 0.3 to 0.4, or to 0.5, or to 0.6, or to 0.7, or to 0.8, or to 0.9, or to 1.0. The CBC can have a CBCI from greater than 0.4 to 1.0, or from 0.4, or from 0.5, or from 0.6 to 0.7, or to 0.9, or to 1.0. The CBC can have a CBCI from 0.7, or from 0.8, or from 0.9 to 1.0.

The CBC can contains (i) from 0.5 wt% to 79 wt%, or to 95 wt % CEP; (ii) from 0.5 wt% to 79 wt%, or to 95 wt % CAOP; and (iii) from 5 wt%, or from 50 wt% to 99 wt % block copolymer, based on total weight of crystalline block composite.

The sum of the weight percents of CEP, CAOP and block copolymer equals 100%.

The block copolymer of the CBC can contain from a lower limit of 5 wt%, or 10 wt%, or 25 wt%, or 30 wt% to an upper limit of 70 wt%, or 75 wt%, or 90 wt%, or 95 wt% crystalline ethylene blocks (CEB); and from an upper limit of 95 wt%, or 90 wt%, or 75 wt%, or 70 wt% to a lower limit of 30 wt%, or 25 wt%, or 10 wt%, or 5 wt% crystalline alpha-olefin blocks (CAOB).

The CBC can contain (i) a CEP that is a crystalline ethylene/propylene copolymer (CEP); (ii) a CAOP that is an isotactic crystalline propylene homopolymer (iPP); and (iii) a block copolymer containing an iPP block (CAOB) and an EP block (CEB); wherein the block copolymer includes a diblock with the Formula (2): (CEP)-(iPP) Formula (2).

The CBC can contain, consist essentially of, or consist of:
(i) from a lower limit of 0.5 wt%, or 10 wt%, or 20 wt%, or 30 wt% to an upper limit of 40 wt%, or 50 wt%, or 60 wt%, or 70 wt%, or 79 wt%, or 95 wt% CEP;
(ii) from a lower limit of 0.5 wt%, or 10 wt%, or 20 wt%, or 30 wt% to an upper limit of 40 wt%, or 50 wt%, or 60 wt%, or 70 wt%, or 79 wt%, or 95 wt% iPP; and
(iii) from a lower limit of 5 wt%, or 10 wt%, or 25 wt%, or 30 wt% or 50 wt% to an upper limit of 70 wt%, or 80 wt%, or 90 wt%, or 95 wt%, or 99 wt % block copolymer, based on total weight of the CBC; and
the crystalline block composite has one, some, or all of the following properties:
(a) the CEP contains from 85 wt%, or from 89 wt% to 92 wt%, or to 95 wt%, or to 99 wt% ethylene and a reciprocal amount of propylene, or from 1 wt%, or from 5 wt%, or from 8 wt% to 11 wt%, or to 15 wt% propylene, based on the total weight of the CEP; and/or
(b) the CEP contains from 90 mol%, or from 91 mol%, or from 92 mol% to 95 mol%, or to 96 mol%, or to 97 mol%, or to 98 mol%, or to 99 mol% polymerized ethylene units and a reciprocal amount of polymerized propylene units, or from 1 mol%, or from 2 mol%, or from 3 mol%, or from 4 mol%, or from 5 mol% to 8 mol%, or to 9 mol%, or to 10 mol% polymerized propylene units, based on the total number of moles of the CEP; and/or
(c) the iPP contains from an upper limit of100 wt%, or 99.5 wt%, or 99 wt% to a lower limit of 95 wt%, or 90 wt%, or 85 wt%, or 80 wt%, or 75 wt%, or 70 wt%, or 65 wt%, or 60 wt%, or 55 wt% propylene and a reciprocal amount of ethylene, or from a lower limit of 0 wt%, or 0.5 wt% to an upper limit of 1 wt%, or 5 wt%, or 10 wt%, or 15 wt%, or 20 wt%, or 25 wt%, or 30 wt%, or 35 wt%, or 40 wt%, or 45 wt% ethylene, based on the total weight of the iPP; and/or
(d) the iPP contains from a lower limit of 90 mol%, or 91 mol%, or 92 mol%, or 93 mol%, or 94 mol%, or 95 mol%, or 96 mol%, or 97 mol%, or 98 mol% to 99 mol% polymerized propylene units and a reciprocal amount of polymerized ethylene units, or from 1 mol% to an upper limit of 2 mol%, or 3 mol%, or 4 mol%, or 5 mol%, or 6 mol%, or 7 mol%, or 8 mol%, or 9 mol%, or 10 mol% polymerized ethylene units, based on the total number of moles of the iPP; and/or
(e) the block copolymer contains from a lower limit of 5 wt%, or 10 wt%, or 25 wt%, or 30 wt% to an upper limit of 50 wt%, or 70 wt%, or 75 wt%, or 90 wt%, or 95 wt% EB and a reciprocal amount, or from an upper limit of 95 wt%, or 90 wt%, or 75 wt%, or 70 wt%, or 50 wt% to a lower limit of 30 wt%, or 25 wt%, or 10 wt%, or 5 wt% iPP blocks, based on the total weight of the block copolymer; and/or
(f) a CBCI from a lower limit of 0.1, or 0.2, or 0.3, or 0.4, or 0.5, or 0.6 to an upper limit of 0.7, or 0.8, or 0.9, or 1.0; and/or
(g) a melt flow rate (MFR) from a lower limit of 0.1 g/10 min, or 5 g/10 min, or 10 g/10 min, or 15 g/10 min, or 20 g/10 min, or 23 g/10 min to an upper limit of 40 g/10 min, or 50 g/10 min, or 1,000 g/10 min at 230 °C and 2.16 kg according to ASTM 1238-13; and/or
(h) a weight average molecular weight (Mw) from a lower limit of 50,000 g/mol, or 70,000 g/mol, or 80,000 g/mol, or 100,000 g/mol to an upper limit of 130,000 g/mol, or 150,000 g/mol, or 200,000 g/mol, or 300,000 g/mol, or 500,000 g/mol, or 1,000,000 g/mol; and/or
(i) a Mw/Mn from a lower limit of 1.0, or 1.5, or 2.0, or 2.5, or 3.0, or 3.5, or 3.7, or 3.8, or 4.0 to an upper limit of 4.3, or 4.5, or 5.0; and/or
(j) a heat of fusion (or melt enthalpy) from a lower limit of 20 J/g, or 25 J/g, or 30 J/g, or 35 J/g, or 50 J/g, or 60 J/g, or 70 J/g, or 75 J/g, or 80 J/g, or 85 J/g, or 90 J/g, or 92 J/g to an upper limit of 100 J/g, or 110 J/g, or 115 J/g, or 125 J/g; and/or
(k) a crystallization temperature, Tc, from a lower limit of 70°C, or 75 °C, or 80°C, or 85°C, or 90°C to 95°C, or to 100°C; and/or
(l) a first peak Tm1CBC from a lower limit of 100°C, or 110°C, or 120°C, or 130°C to an upper limit of 136°C, or 140°C, or 145°C, or 150°C; and/or
(m) a second peak Tm2CBC from a lower limit of 90°C, or 95°C, or 100°C, or 103°C to an upper limit of 105°C, or 110°C, or 115°C, or 120°C, or 125°C, or 130°C, or 140°C, or 150°C; and/or
(n) a difference between Tm1CBC and Tm2CBC that is greater than 40°C, or greater than 50°C, or greater than 60°C; and/or
(o) a total ethylene content from from 20 wt%, or from 25 wt%, or from 28 wt% to 47 wt%, or to 50 wt%, or to 55 wt%, or to 60 wt%, or to 70 wt%, based on the total weight of the CBC. Thee CBC can have all of the above properties (a)-(o).

The crystalline block composite can contain, consist essentially of, or consist of:
(i) a crystalline ethylene-based polymer having an ethylene content of greater than 90 mol%;
(ii) a crystalline propylene-based polymer having a propylene content of greater than 90 mol%; and
(iii) a block copolymer comprising a crystalline ethylene block and a crystalline propylene block;

wherein the crystalline ethylene block of the (iii) block copolymer is the same composition as the (i) crystalline ethylene-based polymer; and the crystalline propylene block of the (iii) block copolymer is the same composition as the (ii) crystalline propylene-based polymer; and
the CBC has one, some, or all, of the following properties:
   (a) a melt flow rate (MFR) from a lower limit of 0.1 g/10 min, or 5 g/10 min, or 10 g/10 min, or 15 g/10 min, or 18 g/10 min to an upper limit of 20 g/10 min, or 30 g/10 min, or 50 g/10 min, or 1,000 g/10 min at 230 °C and 2.16 kg according to ASTM 1238-13; and/or
   (b) exhibits two melting peaks; and/or
   (c) a first peak Tm1CBC from a lower limit of 100°C, or 110°C, or 120°C, or 130°C to an upper limit of136°C, or 140°C, or 145°C, or 150°C; and/or
   (d) a second peak Tm2CBC from a lower limit of 90°C, or 95°C, or 100°C, or 103°C to an upper limit of 105°C, or 110°C, or 115°C, or 120°C, or 125°C, or 130°C, or 140°C, or 150°C; and/or
   (e) a difference between Tm1CBC and Tm2CBC that is greater than 40°C, or greater than 50°C, or greater than 60°C. In a further embodiment, the CBC has all of the above properties (a)-(e).

The crystalline block composite may comprise two or more variations as discussed herein.

It is understood that the sum of the components in each of the polymers disclosed herein, including the foregoing BC and CBC polymers, yields 100 mol%.

A preferred BC is one comprised of polymerized propylene. Desirably the PP block copolymer is one comprised of isotactic polypropylene (iPP) based block and an EP copolymer based block. The block segment composition may range from about 10 to 90 weight percent or preferably 30-70 weight % of EP block and corresponding 90 to 10 weight percent or preferably 70 to 30 weight percent of iPP block, with the EP block having at least about 60%, 80% to about 90% by wt. % ethylene on an overall average and the balance being propylene. Ethylene and propylene being referred to within the block is naturally understood to mean the residue of these after being incorporated into the polymer. Such PP block copolymers are available from The Dow Chemical Company (Midland, MI) under the trademark INTUNE.

### Additional Components

The thermoplastic material can further comprise certain optional added components such as a pigment, filler (e.g. glass beads, talc, calcium carbonate, carbon fiber, glass fiber), lubricant, slip agent, or flame retardant. The amount of all such optional added components combined is preferably less than 30 weight percent or less than 20 weight percent, or less than 10 weight percent, less than 5 weight percent based on total weight of the thermoplastic material. When used, the additional optional added components may be present in from 0.1 weight percent or from 1 weight percent based on total weight of the thermoplastic material. Any of the additional components individually can be present in an amount of from 0.1, or from 1 weight percent to less than 25, or less than 20, or less than 15, or less than 10, or less than 5 weight percent based on total weight of the thermoplastic material. Particularly, the composition can have fibrous fillers fibrous filler and inorganic filler in amounts less than 25, or less than 20, or less than 15, or less than 10, or less than 5 weight percent (separate and combined). Lubricants such as silicone fluid or polymer processing aids such as fluoropolymers (e.g. 3M Dynamar^{™} polymer processing additive) can be present in amounts of less than 2%, less than 1 % or less than 0.1%.

### The Article

The articles made by the above method comprise at least two layers adhered together, at least one layer comprising the thermoplastic material as described herein. The articles can comprise a plurality of layers where at least a portion of the layers comprise the thermoplastic material as described herein. The articles can comprise a plurality of layers wherein all the layers comprise the thermoplastic material as described herein. The articles can comprise a plurality of layers or the thermoplastic material as described herein and support layers of another polymer that may be removed such as those known in the art including, for example, waxes and cellulosic based polymers.

### TEST METHODS

Melt flow rate (MFR) can be measured in accordance with ASTM D-1238 -13 (230°C; 2.16 kg). The result is reported in grams/10 minutes. Melt index (MI) can be measured in accordance with ASTM D-1238 -13 (190°C; 2.16 kg). The result is reported in grams/10 minutes.

### Differential Scanning Calorimetry (DSC)

Differential Scanning Calorimetry (DSC) can be used to measure the melting, crystallization, and glass transition behavior of a polymer over a wide range of temperature. For example, the TA Instruments Q1000 DSC, equipped with an RCS (refrigerated cooling system) and an autosampler was used to perform this analysis. During testing, a nitrogen purge gas flow of 50 ml/min was used. Each sample was melt pressed into a thin film at 190°C; the melted sample was then air-cooled to room temperature (25°C). A 3-10 mg, 6 mm diameter specimen was extracted from the cooled polymer, weighed, placed in a light aluminum pan (50 mg), and crimped shut. Analysis was then performed to determine its thermal properties.

The thermal behavior of the sample was determined by ramping the sample temperature up and down to create a heat flow versus temperature profile. First, the sample was rapidly heated to 180°C and held isothermal for 3 minutes in order to remove its thermal history. Next, the sample was cooled to -80°C at a 10°C/minute cooling rate and held isothermal at -80°C for 3 minutes. The sample was then heated to 180°C (this is the "second heat" ramp) at a 10°C/minute heating rate. The cooling and second heating curves were recorded. The values determined are extrapolated onset of melting, Tₘ, and extrapolated onset of crystallization, T_{c}. The heat of fusion (H_{f}) (also known as melt enthalpy) and the peak melting temperature were reported from the second heat curve. Melting point, Tₘ, was determined from the DSC heating curve by first drawing the baseline between the start and end of the melting transition. A tangent line was then drawn to the data on the low temperature side of the melting peak. Where this line intersects the baseline is the extrapolated onset of melting (Tₘ). This is as described in Bernhard Wunderlich, The Basis of Thermal Analysis, in Thermal Characterization of Polymeric Materials 92, 277-278 (Edith A. Turi ed., 2d ed. 1997). The melting point is the peak temperature.

### ¹³C Nuclear Magnetic Resonance (NMR)

Sample Preparation: samples were prepared by adding approximately 2.6g of a 50/50 mixture of tetrachloroethane-d2/orthodichlorobenzene that was 0.025M in chromium acetylacetonate (relaxation agent) to 0.21 g sample in a 10mm NMR tube. The samples were dissolved and homogenized by heating the tube and its contents to 135-140°C.

Data Acquisition Parameters: data was collected using a Bruker 400 MHz spectrometer equipped with a Bruker Dual DUL high-temperature CryoProbe. The data was acquired using 320 transients per data file, a 7.3 sec pulse repetition delay (6 sec delay + 1.3 sec acq. time), 90 degree flip angles, and inverse gated decoupling with a sample temperature of 120°C. All measurements were made on non-spinning samples in locked mode. Samples were homogenized immediately prior to insertion into the heated (125°C) NMR Sample changer, and were allowed to thermally equilibrate in the probe for 7 minutes prior to data acquisition. The acquisitions were carried out using spectral width of 25,000Hz and a file size of 65K data points. The NMR is used to determine total weight percent of ethylene of whole polymer, the weight percent of ethylene in xylene soluble fraction, e.g., with respect to the crystalline block composite index or block composite index discussed below.

### Gel Permeation Chromatography (GPC) for molecular weight

The molecular weight and molecular weight distributions set forth herein can be determined by GPC calibrated to polystyrene standards. For example, a high temperature gel permeation chromatography (GPC) system such as unit from Agilent Technology, and PolymerChar (Valencia, Spain) were used. The concentration detector was an Infra-red detector (IR-5) from Polymer Char Inc. Data collection was performed using GPCOne (PolymerChar). The carrier solvent was 1,2,4-trichlorobenzene (TCB). The system was equipped with an on-line solvent degas device from Agilent. The column compartment was operated at 150°C. The columns were four Mixed A LS 30 cm, 20 micron columns. The solvent was nitrogen-purged TCB containing approximately 200 ppm 2,6-di-t-butyl-4-methylphenol (BHT). The flow rate was 1.0 mL/min, and the injection volume was 200 µl. A "2 mg/mL" sample concentration was prepared by dissolving the sample in N2 purged and preheated TCB (containing 200 ppm BHT), for 2.5 hours at 160°C, with gentle agitation.

The GPC column set was calibrated by running twenty narrow molecular weight distribution polystyrene standards. The molecular weight (MW) of the standards ranges from 580 g/mol to 8,400,000 g/mol, and the standards were contained in six "cocktail" mixtures. Each standard mixture had at least a decade of separation between individual molecular weights. The equivalent polypropylene molecular weights of each PS standard were calculated by using following equation, with reported Mark-Houwink coefficients for polypropylene (Th.G. Scholte, N.L.J. Meijerink, H.M. Schoffeleers, & A.M.G. Brands, J. Appl. Polym. Sci., 29, 3763-3782 (1984)) and polystyrene (E.P. Otocka, R.J. Roe, N.Y. Hellman, & P.M. Muglia, Macromolecules, 4, 507 (1971)).

### High Temperature Liquid Chromatography (HTLC)

High Temperature Liquid Chromatography (HTLC) Experimental Method Instrumentation was performed according to the published method of D. Lee et al., J. Chromatogr. A 2011, 1218, 7173, with minor modifications. Two Shimadzu (Columbia, MD, USA) LC-20AD pumps were used to deliver decane and trichlorobenzene (TCB), respectively. Each pump was connected to a 10:1 fixed flow splitter (Part #: 620-PO20-HS, Analytical Scientific Instruments Inc., CA, USA). The splitter had a pressure drop of 1500 psi (10.34 MPa) at 0.1 mL/min in H2O according to the manufacturer. The flow rate of both pumps was set at 0.115 mL/min. After the splitting, the minor flow was 0.01 mL/min for both decane and TCB, determined by weighing the collected solvents for more than 30 min. The volume of the collected eluent was determined by the mass and the densities of the solvents at room temperature. The minor flow was delivered to the HTLC column for separation. The main flow was sent back to the solvent reservoir. A 50-µL mixer (Shimadzu) was connected after the splitters to mix the solvents from the Shimadzu pumps. The mixed solvents were then delivered to the injector in the oven of Waters (Milford, MA, USA) GPCV2000. A Hypercarb^{™} column (2.1 × 100 mm, 5 µm particle size) was connected between the injector and a 10-port VICI valve (Houston, TX, USA). The valve was equipped with two 60-µL sample loops. The valve was used to continuously sample eluent from the first dimension (D1) HTLC column to the second dimension (D2) SEC column. The pump of Waters GPCV2000 and a PLgel Rapid^{™}-M column (10 × 100 mm, 5 µm particle size) were connected to the VICI valve for D2 size exclusion chromatography (SEC). The symmetric configuration was used for the connections as described in the literature (Y. Brun & P. Foster, J. Sep. Sci. 2010, 33, 3501). A dual-angle light scattering detector (PD2040, Agilent, Santa Clara, CA, USA) and an IR5 inferred absorbance detector were connected after the SEC column for measurement of concentration, composition, and molecular weight.

Separation for HTLC: Approximately 30 mg were dissolved in 8-mL decane by gently shaking the vial at 160°C for 2 hours. The decane contained 400 ppm BHT(2,6-Di-tert-butyl-4-methylphenol) as the radical scavenger. The sample vial was then transferred to the autosampler of GPCV2000 for injection. The temperatures of the autosampler, the injector, both the Hypercarb and the PLgel columns, the 10-port VICI valve, and both the LS and IR5 detectors were maintained at 140°C throughout the separation.

The initial conditions before injection were as follows: flow rate for the HTLC column was 0.01 mL/min; solvent composition in the D1 Hypercarb column was 100% decane; flow rate for the SEC column was 2.51 mL/min at room temperature; solvent composition in the D2 PLgel column was 100% TCB; solvent composition in the D2 SEC column did not change throughout the separation.

A 311-µL aliquot of sample solution was injected into the HTLC column. The injection triggered the gradient described below:
from 0 - 10 min, 100% decane/ 0% TCB;
from 10 - 651 min, TCB was increased linearly from 0% TCB to 80% TCB.

The injection also triggered the collection of the light scattering signal at 15° angle (LS15) and the "measure" and "methyl" signals from IR5 detector (IRmeasure and IRmethyl) using EZChrom^{™} chromatography data system (Agilent). The analog signals from detectors were converted to digital signals through a SS420X analog-to-digital converter. The collection frequency was 10 Hz. The injection also triggered the switch of the 10-port VICI valve. The switch of the valve was controlled by the relay signals from the SS420X converter. The valve was switched every 3 min. The chromatograms were collected from 0 to 651 min. Each chromatogram consisted of 651/3 = 217 SEC chromatograms.

After the gradient separation, 0.2 mL of TCB and 0.3 mL of decane were used to clean and re-equilibrate the HTLC column for next separation. The flow rate of this step was 0.2 mL/min, delivered by a Shimadzu LC-20 AB pump connected to the mixer.

### Examples

### Materials:

### PCRPO:

- Avangard Natura^{™} 150PCR (collected from flexible packaging waste streams that frequently include significant amount of LDPE_ (melting point: 108 °C (by Dynamic Scanning Calorimetry (DSC), 0.922-0.94 grams per cubic centimeter (g/cc) density, Melt Flow Index (MI) by ASTM D1238 of 0.8145 g/10 minutes, 1.85 Ash content.)
- ENVISION ECOPRIME^{™} HDPE Rich stream (Gel Index (200 micron) of 296.2), melting point of 133 °C by DSC, 0.9657 g/cc density, 0.764 g/10 min MI.

### Olefin Block Copolymer

Block Copolymer CBC1 is used having the following characteristics:

| | MFR (230°C/2.16 kg) (g/10 min) | wt% PP from HTLC Separation | Mw (kg/mol) | Mw/Mn | Total wt% C₂ (NMR) | Tm (°C) Peak 1/ Peak 2 | Tc (°C) |
|---|---|---|---|---|---|---|---|
| CBC 1 | 9.5 | 19.9 | 104 | 2.73 | 47.6 | 108 / 130 | 88 |

- Wt% PP - Weight percentage propylene polymer in the CBC or BC as measured by HTLC Separation as described above.
- Mw - the weight average molecular weight of the CBC or BC in Kg/mol as determined by GPC as described above.
- Mw/Mn - the molecular weight distribution of the CBC or BC as determined by GPC as described above.
- Total Wt% C₂ - the weight percentage of ethylene in the CBC or BC as determined by NMR, the balance being propylene.
- Tm (°C) Peak 1 (Peak 2) - Peak melting temperature as determined by the second heating curve from DSC. Peak 1 refers to the melting of CEB / CEP (for CBC), or EB / EP for (BC), whereas Peak 2 refers to the melting of CEB or CEP.
- Tc (°C) - Peak crystallization temperature as determined by DSC cooling scan.

The block copolymer can be prepared by may be prepared by a process comprising contacting an addition polymerizable monomer or mixture of monomers under addition polymerization conditions with a composition comprising at least one addition polymerization catalyst, at least one cocatalyst, and a chain shuttling agent, said process being characterized by formation of at least some of the growing polymer chains under differentiated process conditions in two or more reactors operating under steady state polymerization conditions or in two or more zones of a reactor operating under plug flow polymerization conditions. The term, "shuttling agent" refers to a compound or mixture of compounds that is capable of causing polymeryl exchange between at least two active catalyst sites under the conditions of the polymerization. That is, transfer of a polymer fragment occurs both to and from one or more of the active catalyst sites. In contrast to a shuttling agent, a "chain transfer agent" causes termination of polymer chain growth and amounts to a one-time transfer of growing polymer from the catalyst to the transfer agent. In a preferred embodiment, the crystalline block composites comprise a fraction of block polymer which possesses a most probable distribution of block lengths.

Suitable processes useful in producing CBC1 may be found, for example, in U.S. Patent Application Publication No. 2008/0269412, published on Oct. 30, 2008. In particular, the polymerization is desirably carried out as a continuous polymerization, preferably a continuous, solution polymerization, in which catalyst components, monomers, and optionally solvent, adjuvants, scavengers, and polymerization aids are continuously supplied to one or more reactors or zones and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. The chain shuttling agent(s) may be added at any point during the polymerization including in the first reactor or zone, at the exit or slightly before the exit of the first reactor, or between the first reactor or zone and the second or any subsequent reactor or zone. Due to the difference in monomers, temperatures, pressures or other difference in polymerization conditions between at least two of the reactors or zones connected in series, polymer segments of differing composition such as comonomer content, crystallinity, density, tacticity, regio-regularity, or other chemical or physical difference, within the same molecule are formed in the different reactors or zones. The size of each segment or block is determined by continuous polymer reaction conditions, and preferably is a most probable distribution of polymer sizes.

When producing a block polymer having a crystalline ethylene block (CEB) and a crystalline alpha-olefin block (CAOB) in two reactors or zones it is possible to produce the CEB in the first reactor or zone and the CAOB in the second reactor or zone or to produce the CAOB in the first reactor or zone and the CEB in the second reactor or zone. It may be more advantageous to produce CEB in the first reactor or zone with fresh chain shuttling agent added. The presence of increased levels of ethylene in the reactor or zone producing CEB may lead to much higher molecular weight in that reactor or zone than in the zone or reactor producing CAOB. The fresh chain shuttling agent will reduce the MW of polymer in the reactor or zone producing CEB thus leading to better overall balance between the length of the CEB and CAOB segments.

When operating reactors or zones in series it is necessary to maintain diverse reaction conditions such that one reactor produces CEB and the other reactor produces CAOB. Carryover of ethylene from the first reactor to the second reactor (in series) or from the second reactor back to the first reactor through a solvent and monomer recycle system is preferably minimized. There are many possible unit operations to remove this ethylene, but because ethylene is more volatile than higher alpha olefins one simple way is to remove much of the unreacted ethylene through a flash step by reducing the pressure of the effluent of the reactor producing CEB and flashing off the ethylene. An exemplary approach is to avoid additional unit operations and to utilize the much greater reactivity of ethylene versus higher alpha olefins such that the conversion of ethylene across the CEB reactor approaches 100%. The overall conversion of monomers across the reactors can be controlled by maintaining the alpha olefin conversion at a high level (90 to 95%).

Exemplary catalysts and catalyst precursors for use to from the crystalline block composite include metal complexes such as disclosed in, e.g., International Publication No WO 2005/090426. Other exemplary catalysts are also disclosed in U.S. Patent Publication Nos. 2006/0199930, 2007/0167578, and 2008/0311812; U.S. Patent No. 7,355,089; and International Publication No. WO 2009/012215.

The crystalline block composites (CBC1) can be characterized as appropriate by Differential Scanning Calorimetry (DSC), C13 Nuclear Magnetic Resonance (NMR), Gel Permeation Chromatography (GPC), and high temperature liquid chromatography (HTLC) fractionation. These are described in more detail in US Patent Application Publication Nos US2011-0082257, US2011-0082258 and US2011-0082249, all published on April 7, 2011, with respect to descriptions of the analysis methods.

### Procedures:

Compounding is done by a standard method known in the art using a JSW twin screw extruder at 135 °C.

Filament is formed by a standard method known in the art using a Noztek Pro Filament Extruder. Briefly, pellets were fed into a desktop single screw extruder. The extruder is heated to 140 °C, and the screw was turning at 15 rotations per minute (RPM). The polymer melt was extruded through a 1.75 mm nozzle to produce filament that could be fed into a 3D Printer.

3D Printing: Parts were printed on a Hyrel system 30 M, which is commercially available from Hyrel 3D, Norcross, Georgia (USA). Small three dimensional hexagonal prisms (with dimensions 1.5 cm × 5 mm or 1.5 cm × 5 cm with layer height 0.2 mm with 100% rectilinear infill were printed. Printer bed temp was 95 °C, while nozzle temp ranged from 180 to 240 °C.

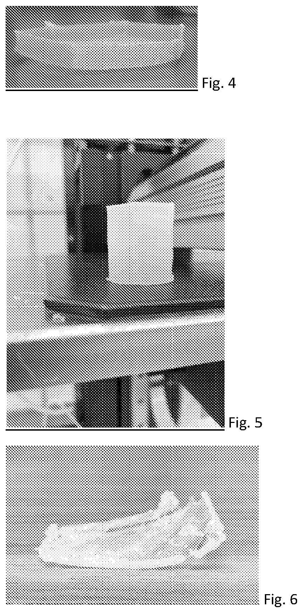

Compositions are prepared by compounding (only when two materials are used), made into filaments and then printed as described above with varying amounts of OBC and PCRPO as shown in Table 1. Samples with 20 weight percent or less OBC failed to extrude or failed to print Sample 1 was successfully printed and is shown in Fig. 4. Sample 4 was successfully printed into an article and is shown in Fig. 5. Fig. 6 shows an example of a material which could extrude but which could not be successfully printed due to extreme warpage during print - successive layers could no longer be added.

**Table 1**

| Sample Number | PCRPO used | Amount OBC (Weight Percent) | Amount PCRPO (weight Percent) | Extrusion result | Print result |
|---|---|---|---|---|---|
| 1 | Avangard Natura 150 L/LLDPE | 40 | 60 | OK | Passed |
| 2 (Comparative) | Avangard Natura 150 L/LLDPE | 20 | 80 | Fail | N/A |
| 3 (comparative) | Avangard Natura 150 L/LLDPE | 0 | 100 | Fail | N/A |
| 4 | ENVISION ECOPRIME HDPE | 40 | 60 | OK | Passed |
| 5 (comparative) | ENVISION ECOPRIME HDPE | 0 | 100 | OK | Fail |

Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

## Claims

1. A method of additive manufacturing to form an additive manufactured article comprising,
(i) providing a thermoplastic material comprising 5 to 75, preferably 20 to 60, weight percent of a post-consumer recycled polyolefin composition and 25 to 95 weight percent of an olefin block copolymer composition based on total weight of the thermoplastic material, wherein the post-consumer recycled polyolefin composition comprises at least 50 weight %, preferably at least 75 weight %, more preferably at least 90 weight% of a polyolefin and at least 0.1 weight %, preferably at least 0.5, weight %, more preferably at least 1 weight% of a contaminant;
(ii) heating and dispensing said thermoplastic material through a nozzle to form an extrudate deposited on a base,
(iii) moving the base, nozzle or combination thereof while dispensing the thermoplastic material so that there is horizontal displacement between the base and nozzle in a predetermined pattern to form an initial layer of the material on the base, and
(iv) repeating steps (ii) and (iii) to form a subsequent layer of the material adhered on the initial layer, and
(v) optionally repeating step steps (ii) and (iii) to form additional subsequent layers adhered to previously formed subsequent layers.

2. The method of claim 1 wherein the post-consumer recycled polyolefin is **characterized by** a gel index (200 micron) of at least 100 mm²/24.6 cm³ (measured according to the method disclosed in the description).

3. The method of any one of the preceding claims wherein the polyolefin in the post-consumer recycled polyolefin composition is selected from high density polyethylene, low density polyethylene, linear low density polyethylene, polypropylene, functionalized polyolefins and combinations of two or more of the preceding polymers.

4. The method of any one of the preceding claims wherein the contaminant in the post-consumer recycled polyolefin composition is selected from non-olefin polymers, oxidized polyolefins, inorganic materials, adhesive materials, paper, oil residue, food residue, and combinations of two or more thereof.

5. The method of any one of the preceding claims wherein the amount of contaminant is less than 5 weight percent of the post-consumer recycled polyolefin composition.

6. The method of any one of the preceding claims wherein the olefin block copolymer composition comprises a block composite, crystalline block composite or mixture having therein the block olefin copolymer, the block olefin copolymer comprising an isotactic polypropylene block and a polyethylene rich block.

7. The method of claim 6 wherein the isotactic polypropylene blocks are from 10% to 90%, preferably 30 to 70%, by mole of the olefin block copolymer with the remaining balance being the polyethylene rich blocks.

8. The method of claim 6 or 7 wherein the polyethylene rich blocks on average comprise least 60%, preferably at least 70%, by mole ethylene with the balance being propylene, based on total mole of the polyethylene rich block.

9. The method of any one of claims 6-8 wherein the block composite or crystalline block composite has a block composite index of 0.1 to 0.9, preferably 0.2 to 0.8 as measured by nuclear magnetic resonance (NMR) spectroscopy.

10. The method of any of the previous claims wherein the thermoplastic comprises less than 20, preferably less than 5, weight percent of fibrous fillers and inorganic materials.

11. The method of any of the preceding claims wherein the additive manufactured article is a prototype.

12. The method of any one of the preceding claims wherein the thermoplastic material is formed into a filament that is drawn into the nozzle and melted within the nozzle.

13. The method of anyone of the preceding claims wherein the post-consumer recycled polyolefin composition comprises at least 80 weight percent, preferably at least 85 weight percent, of the polyolefin.

14. An additive manufactured article comprised of at least two layers adhered together, at least one layer being comprised of a thermoplastic material comprising 5 to 75, preferably 20 to 60, weight percent of a post-consumer recycled polyolefin composition and 25 to 95 weight percent of an olefin block copolymer composition based on total weight of the thermoplastic material, wherein the post-consumer recycled polyolefin composition comprises at least 50 weight %, preferably at least 75 weight %, more preferably at least 90 weight% of a polyolefin and at least 0.1 weight %, preferably at least 0.5, weight %, more preferably at least 1 weight% of a contaminant.

15. A filament useful for additive manufacture comprising 5 to 75, preferably 20 to 60, weight percent of a post-consumer recycled polyolefin composition and 25 to 95 weight percent of an olefin block copolymer composition based on total weight of the thermoplastic material, wherein the post-consumer recycled polyolefin composition comprises at least 50 weight %, preferably at least 75 weight %, more preferably at least 90 weight% of a polyolefin and at least 0.1 weight %, preferably at least 0.5, weight %, more preferably at least 1 weight% of a contaminant.

## Patentansprüche

1. Verfahren einer additiven Fertigung, um einen additiven gefertigten Artikel auszubilden, umfassend
(i) Bereitstellen eines thermoplastischen Materials, umfassend zu 5 bis 75, vorzugsweise zu 20 bis 60, Gewichtsprozent eine gebrauchte recycelte Polyolefinzusammensetzung und zu 25 bis 95 Gewichtsprozent eine Olefinblockcopolymerzusammensetzung basierend auf dem Gesamtgewicht des thermoplastischen Materials, wobei die gebrauchte recycelte Polyolefinzusammensetzung mindestens zu 50 Gew.-%, vorzugsweise mindestens zu 75 Gew.-%, stärker bevorzugt mindestens zu 90 Gew.-% ein Polyolefin und mindestens zu 0,1 Gew.-%, vorzugsweise mindestens zu 0,5 Gew.-%, stärker bevorzugt mindestens zu 1 Gew.-% eine Verunreinigung umfasst;
(ii) Erwärmen und Abgeben des thermoplastischen Materials durch eine Düse, um ein Extrudat auszubilden, das auf eine Basis abgeschieden wird,
(iii) Bewegen der Basis, der Düse oder einer Kombination davon während das thermoplastische Material abgegeben wird, sodass eine horizontale Verschiebung zwischen der Basis und der Düse in einem vorbestimmten Muster vorliegt, um eine anfängliche Schicht des Materials auf der Basis auszubilden, und
(iv) Wiederholen der Schritte (ii) und (iii), um eine nachfolgende Schicht des Materials auszubilden, die auf der anfänglichen Schicht haftet, und
(v) optional Wiederholen der Schritte (ii) und (iii), um zusätzliche nachfolgende Schichten auszubilden, die an zuvor ausgebildeten nachfolgenden Schichten haften.

2. Verfahren nach Anspruch 1, wobei das gebrauchte recycelte Polyolefin **gekennzeichnet ist durch** einen Gelindex (200 Mikrometer) von mindestens 100 mm²/24,6 cm (gemäß dem in der Beschreibung offenbarten Verfahren gemessen).

3. Verfahren nach einem der vorstehenden Ansprüche, wobei das Polyolefin in der gebrauchten recycelten Polyolefinzusammensetzung aus Polyethylen hoher Dichte, Polyethylen niedriger Dichte, linearem Polyethylen niedriger Dichte, Polypropylen, funktionalisierten Polyolefinen und Kombinationen von zwei oder mehr der vorstehenden Polymere ausgewählt wird.

4. Verfahren nach einem der vorstehenden Ansprüche, wobei die Verunreinigung in der gebrauchten recycelten Polyolefinzusammensetzung aus Nichtolefinpolymeren, oxidierten Polyolefinen, anorganischen Materialien, Haftmaterialien, Papier, einem Ölrückstand, einem Lebensmittelrückstand und Kombinationen von zwei oder mehr davon ausgewählt wird.

5. Verfahren nach einem der vorstehenden Ansprüche, wobei die Menge an Verunreinigung weniger als 5 Gewichtsprozent der gebrauchten recycelten Polyolefinzusammensetzung beträgt.

6. Verfahren nach einem der vorstehenden Ansprüche, wobei die Olefinblockcopolymerzusammensetzung einen Blockverbundstoff, einen kristallinen Blockverbundstoff oder eine Mischung umfasst, die darin das Blockcopolymer aufweist, das Blockcopolymer umfassend einen isotaktischen Polypropylenblock und einen polyethylenreichen Block.

7. Verfahren nach Anspruch 6, wobei die isotaktischen Polypropylenblöcke von 10 Mol-% bis 90 Mol-%, vorzugsweise 30 bis 70 Mol-%, des Olefinblockcopolymers betragen, wobei der verbleibende Rest die polyethylenreichen Blöcke ist.

8. Verfahren nach Anspruch 6 oder 7, wobei die polyethylenreichen Blöcke durchschnittlich mindestens 60 Mol-%, vorzugsweise mindestens 70 Mol-%, Ethylen umfassen, wobei der Rest Propylen ist, basierend auf der Gesamtmolzahl des polyethylenreichen Blocks.

9. Verfahren nach einem der Ansprüche 6 bis 8, wobei der Blockverbundstoff oder der kristalline Blockverbundstoff einen Blockverbundstoffindex von 0,1 bis 0,9, vorzugsweise 0,2 bis 0,8 aufweist, wie durch Kernspinresonanz-Spektroskopie (NMR-Spektroskopie) gemessen.

10. Verfahren nach einem der vorstehenden Ansprüche, wobei der Thermoplast zu weniger als 20, vorzugsweise zu weniger als 5 Gewichtsprozent, faserige Füllstoffe und anorganische Materialien umfasst.

11. Verfahren nach einem der vorstehenden Ansprüche, wobei der additive hergestellte Artikel ein Prototyp ist.

12. Verfahren nach einem der vorstehenden Ansprüche, wobei das thermoplastische Material zu einem Filament ausgebildet ist, das in die Düse gezogen und innerhalb der Düse geschmolzen wird.

13. Verfahren nach einem der vorstehenden Ansprüche, wobei die gebrauchte recycelte Polyolefinzusammensetzung mindestens zu 80 Gewichtsprozent, vorzugsweise mindestens zu 85 Gewichtsprozent, das Polyolefin umfasst.

14. Additiver gefertigter Artikel, der aus mindestens zwei aneinander haftenden Schichten besteht, wobei mindestens eine Schicht aus einem thermoplastischen Material besteht, umfassend zu 5 bis 75, vorzugsweise zu 20 bis 60, Gewichtsprozent eine gebrauchte recycelte Polyolefinzusammensetzung und zu 25 bis 95 Gewichtsprozent eine Olefinblockcopolymerzusammensetzung basierend auf dem Gesamtgewicht des thermoplastischen Materials, wobei die gebrauchte recycelte Polyolefinzusammensetzung mindestens zu 50 Gew.-%, vorzugsweise mindestens zu 75 Gew.-%, stärker bevorzugt mindestens zu 90 Gew.-% ein Polyolefin und mindestens zu 0,1 Gew.-%, vorzugsweise mindestens zu 0,5 Gew.-%, stärker bevorzugt mindestens zu 1 Gew.-% eine Verunreinigung umfasst.

15. Filament, das für die additive Fertigung nützlich ist, umfassend zu 5 bis 75, vorzugsweise zu 20 bis 60, Gewichtsprozent eine gebrauchte recycelte Polyolefinzusammensetzung und zu 25 bis 95 Gewichtsprozent eine Olefinblockcopolymerzusammensetzung basierend auf dem Gesamtgewicht des thermoplastischen Materials, wobei die gebrauchte recycelte Polyolefinzusammensetzung mindestens zu 50 Gew.-%, vorzugsweise mindestens zu 75 Gew.-%, stärker bevorzugt mindestens zu 90 Gew.-% ein Polyolefin und mindestens zu 0,1 Gew.-%, vorzugsweise mindestens zu 0,5 Gew.-%, stärker bevorzugt mindestens zu 1 Gew.-% eine Verunreinigung umfasst.

## Revendications

1. Procédé de fabrication additive destiné à former un article fabriqué de manière additive comprenant,
(i) la fourniture d'un matériau thermoplastique comprenant 5 à 75, de préférence 20 à 60, pour cent en poids d'une composition polyoléfinique recyclée post-consommation et 25 à 95 pour cent en poids d'une composition de copolymère séquencé oléfinique en fonction du poids total du matériau thermoplastique, la composition polyoléfinique recyclée post-consommation comprenant au moins 50 % en poids, de préférence au moins 75 % en poids, plus préférablement au moins 90 % en poids d'une polyoléfine et au moins 0,1 % en poids, de préférence au moins 0,5 % en poids, plus préférablement au moins 1 % en poids d'un contaminant ;
(ii) le chauffage et la distribution dudit matériau thermoplastique à travers une buse pour former un extrudat déposé sur une base,
(iii) le déplacement de la base, de la buse ou d'une combinaison de celles-ci tout en distribuant le matériau thermoplastique de sorte qu'il y a un déplacement horizontal entre la base et la buse dans un motif prédéterminé pour former une couche initiale du matériau sur la base, et
(iv) la répétition des étapes (ii) et (iii) pour former une couche suivante du matériau fixée par adhérence sur la couche initiale, et
(v) facultativement la répétition des étapes (ii) et (iii) pour former des couches suivantes supplémentaires fixées par adhérence à des couches suivantes précédemment formées.

2. Procédé selon la revendication 1 dans lequel la polyoléfine recyclée post-consommation est **caractérisée par** un indice de gel (200 micromètres) d'au moins 100 mm²/24,6 cm (mesuré selon le procédé décrit dans la description).

3. Procédé selon l'une quelconque des revendications précédentes dans lequel la polyoléfine dans la composition polyoléfinique recyclée post-consommation est choisie parmi polyéthylène haute densité, polyéthylène basse densité, polyéthylène linéaire basse densité, polypropylène, polyoléfines fonctionnalisées et combinaisons de deux des polymères précédents ou plus.

4. Procédé selon l'une quelconque des revendications précédentes dans lequel le contaminant dans la composition polyoléfinique recyclée post-consommation est choisi parmi polymères non oléfiniques, polyoléfines oxydées, matériaux inorganiques, matériaux adhésifs, papier, résidu d'huile, résidu d'aliments, et combinaisons de deux de ceux-ci ou plus.

5. Procédé selon l'une quelconque des revendications précédentes dans lequel la quantité de contaminant est inférieure à 5 pour cent en poids de la composition polyoléfinique recyclée post-consommation.

6. Procédé selon l'une quelconque des revendications précédentes dans lequel la composition de copolymère séquencé oléfinique comprend un composite séquencé, un composite à séquences cristallines ou un mélange ayant en son sein le copolymère oléfinique séquencé, le copolymère oléfinique séquencé comprenant une séquence de polypropylène isotactique et une séquence riche en polyéthylène.

7. Procédé selon la revendication 6 dans lequel les séquences de polypropylène isotactique représentent de 10 % à 90 %, de préférence 30 à 70 %, en moles du copolymère séquencé oléfinique, le solde restant étant les séquences riches en polyéthylène.

8. Procédé selon la revendication 6 ou 7 dans lequel les séquences riches en polyéthylène comprennent en moyenne au moins 60 %, de préférence au moins 70 %, en mole d'éthylène, le solde étant du propylène, en fonction du nombre total de moles de la séquence riche en polyéthylène.

9. Procédé selon l'une quelconque des revendications 6 à 8 dans lequel le composite séquencé ou le composite à séquences cristallines a un indice de composite séquencé de 0,1 à 0,9, de préférence 0,2 à 0,8 tel que mesuré par spectroscopie par résonance magnétique nucléaire (RMN).

10. Procédé selon l'une quelconque des revendications précédentes dans lequel le thermoplastique comprend moins de 20, de préférence moins de 5, pour cent en poids de charges fibreuses et de matériaux inorganiques.

11. Procédé selon l'une quelconque des revendications précédentes dans lequel l'article fabriqué de manière additive est un prototype.

12. Procédé selon l'une quelconque des revendications précédentes dans lequel le matériau thermoplastique est formé en un filament qui est étiré dans la buse et fondu au sein de la buse.

13. Procédé selon l'une quelconque des revendications précédentes dans lequel la composition polyoléfinique recyclée post-consommation comprend au moins 80 pour cent en poids, de préférence au moins 85 pour cent en poids, de la polyoléfine.

14. Article fabriqué de manière additive constitué d'au moins deux couches fixées par adhérence sur elles-mêmes, au moins une couche étant constituée d'un matériau thermoplastique comprenant 5 à 75, de préférence 20 à 60, pour cent en poids d'une composition polyoléfinique recyclée post-consommation et 25 à 95 pour cent en poids d'une composition de copolymère séquencé oléfinique en fonction du poids total du matériau thermoplastique, la composition polyoléfinique recyclée post-consommation comprenant au moins 50 % en poids, de préférence au moins 75 % en poids, plus préférablement au moins 90 % en poids d'une polyoléfine et au moins 0,1 % en poids, de préférence au moins 0,5 % en poids, plus préférablement au moins 1 % en poids d'un contaminant.

15. Filament utile pour la fabrication additive comprenant 5 à 75, de préférence 20 à 60, pour cent en poids d'une composition polyoléfinique recyclée post-consommation et 25 à 95 pour cent en poids d'une composition de copolymère séquencé oléfinique en fonction du poids total du matériau thermoplastique, la composition polyoléfinique recyclée post-consommation comprenant au moins 50 % en poids, de préférence au moins 75 % en poids, plus préférablement au moins 90 % en poids d'une polyoléfine et au moins 0,1 % en poids, de préférence au moins 0,5 % en poids, plus préférablement au moins 1 % en poids d'un contaminant.
